(19) Europäisches Patentamt
European Patent Office
Office européen des brevets

(11) EP 0 661 689 B1

(12) **EUROPEAN PATENT SPECIFICATION**

(45) Date of publication and mention
of the grant of the patent:
**24.11.1999 Bulletin 1999/47**

(51) Int Cl.$^6$: **G10L 3/02**

(21) Application number: **94309676.8**

(22) Date of filing: **22.12.1994**

(54) **Noise reducing method, noise reducing apparatus and telephone set**

Verfahren und Vorrichtung zur Geräuschreduzierung sowie Telefon

Procédé et dispositif pour la réduction du bruit et téléphone

(84) Designated Contracting States:
**DE FR GB**

(30) Priority: **25.12.1993 JP 34746993**

(43) Date of publication of application:
**05.07.1995 Bulletin 1995/27**

(73) Proprietor: **SONY CORPORATION
Tokyo (JP)**

(72) Inventors:
• **Katayanagi, Keiichi, c/o Sony Corporation
Shinagawa-ku, Tokyo (JP)**
• **Nishiguchi, Masayuki, c/o Sony Corporation
Shinagawa-ku, Tokyo (JP)**

(74) Representative:
**Ayers, Martyn Lewis Stanley et al
J.A. KEMP & CO.
14 South Square
Gray's Inn
London WC1R 5LX (GB)**

(56) References cited:
EP-A- 0 459 364          US-A- 4 747 143
US-A- 4 847 897

• ELECTRONICS LETTERS, vol.25, no.17, 17
August 1989, STEVENAGE pages 1186 - 1188
'Real-Time speech enhancement system using
envelope expansion technique'

**Description**

This invention relates to a method for reducing the noise contained in speech signals. More particularly, it relates to a method for noise reducing method applied to a noise reducing device adapted for reducing the noise admixed into the speech signals collected by a microphone.

There are known a variety of methods for reducing the noise contained in speech signals. In many of these methods, a sort of an expanding operation is carried out in which, by taking advantage of the fact noise components are lower in level than speech components, the input signal is processed so that the lower the level of the input signal, the larger is the amount of attenuation of the input signal.

The extent of expansion, that is the expansion ratio, is selected to a moderate value so that the expansion is neither too strong nor too weak, in consideration of the extent of expansion enabling the noise components under the usual state to be reduced effectively.

In such method of reducing the noise by expansion, there may be occasions wherein the effect of noise reduction is insufficient in case of a larger noise contained in the input signal. Conversely, if no noise is contained in the input signal, consonant sounds, such as "sa", "si", "su", "se" and "so" are extinguished by expansion, thus producing unspontaneous sound. That is, expansion is carried out even in such cases wherein the noise is small and there is no necessity of carrying out the noise reducing operation, thus leading to the deteriorated sound quality.

With the above-described noise-reducing method, since the expanding effect becomes the higher the smaller the input signal level, the sound tends to be erased or emitted when expansion is made in combination with a speech coder of muting a signal below a certain constant level, for example, a signal not higher than - 66 dB, thus giving unspontaneous speech on decoding.

US 4,847,897 discloses an adaptive expander for telephone signals which reduces the gain of an amplifier in proportion to the background noise level.

In view of the foregoing, it is an aim of the present invention to provide a noise reducing method whereby the noise may be reduced without deteriorating the sound quality of the reproduced speech signal so that more spontaneous playback sound may be produced.

According to the present invention, there is provided A method for reducing the noise contained in an input speech signal comprising the steps of

detecting the level of a noise component contained in the input speech signal to form a control signal depending on the detected noise level; and

carrying out a noise reducing operation on the input speech signal; characterised in that the noise reducing operation comprises the steps of:

selecting one of a plurality of processing algorithms depending on said control signal, said processing algorithms being

a first noise reducing algorithm for calculating a suppression ratio depending on the level of said input speech signal level and multiplying said input speech signal to the calculated suppression ratio,

a second noise reducing algorithm of calculating a suppression ratio depending on the level of a signal corresponding to said input speech signal whose high-frequency component is enhanced and multiplying said signal by the calculated suppression ratio, and

a third noise reducing algorithm of performing a noise-reducing operation only on the low-frequency component of the input speech signal and adding the noise-reduced low-frequency component to the high-frequency component of the input speech signal.

The present invention also provides apparatus for reducing the noise in an input speech signal.

The contents of the noise-reducing operation, modified depending on the control signal, preferably include changing the threshold value of the input signal level for level expansion. That is, if the input signal level is below a pre-set threshold value and level expansion is to be performed for noise reduction, the threshold value is changed or switching-controlled depending on a control signal generated on the basis of the noise level detected by the noise level detection step.

The noise reducing operation may be performed in accordance with an input/ output characteristic curve which represents an output signal level in dB to the input signal level in dB and which is in the shape of a kinked line having two or more kinked points. For example, a first threshold value and a second threshold value smaller than the first threshold value are set for the input signal level, and level expansion for noise reduction is performed only when the input level is in a range of from the first threshold value to the second threshold value, while level expansion is not performed and fixed attenuation is used when the input level is smaller than the second threshold value. In this manner, if the noise reducing device is to be used in combination with a device adapted for muting a signal lower than a pre-set level, the phenomenon of the sound being indefinitely produced or muted may be prevented from occurring to resolve the unspontaneous hearing feeling.

The contents of the noise reducing operation are modified by providing for plural noise-reducing algorithms and changing over these algorithms depending on the control signal. To this end, three noise reducing algorithms, that is a first noise reducing algorithm of calculating a suppression ratio depending on the level of said input speech signal level and multiplying the input speech signal with the calculated suppression ratio, a second noise reducing algorithm of calculating a suppression ratio depending on the level of a signal corresponding to the input speech signal the high-frequency component of which is enhanced and multiplying the signal with the calculated suppression ratio, and a third noise reducing algorithm of performing a noise-reducing operation only on the low-frequency component of the input speech signal and adding the noise-reduced low-frequency component to the high-frequency component of the input speech signal, may be provided and one of these algorithms selected depending on the control signal. In this manner, the effect of the noise-reducing operation may be switching-moderated depending on the noise level in such a manner that the noise is reduced intensively in a place where the surrounding noise level is high, thereby further improving the noise-reducing effect.

With the method of the present invention, the effect of the noise reducing operation may be changed over depending on the background noise level for adjustment to an optimum value of the noise reduction. Specifically, the expansion is suppressed for the low background noise level for preventing deterioration in the sound quality.

BRIEF DESCRIPTION OF THE DRAWINGS

Fig.1 is a block circuit diagram showing a noise reducing device for carrying out the noise reducing method according to a first embodiment of the present invention.

Fig.2 is a graph showing an illustrative relationship between input and output signals when the noise reduction is performed using a noise suppression ratio from a suppression ratio calculating circuit from a noise reducing device shown in Fig.1.

Fig.3 is a graph showing another illustrative relationship between input and output signals when the noise reduction is applied using a noise suppression ratio from a suppression ratio calculating circuit from a noise reducing device shown in Fig.1.

Fig.4 is a block circuit diagram showing an example of a circuit arrangement of a speech transmitting device employing the noise reducing device shown in Fig.1.

Fig.5 is a flow chart for illustrating the former half portion of the operation of the noise detection circuit of the noise reducing device shown in Fig.1.

Fig.6 is a flow chart for illustrating the former half portion of the operation of the noise detection circuit of the noise reducing device shown in Fig.1.

Fig.7 is a block circuit diagram showing a noise reducing device for carrying out the noise reducing method according to a second embodiment of the present invention.

DETAILED DESCRIPTION OF THE PREFERRED EMBODIMENTS

Referring to the drawings, certain preferred embodiments of the noise reducing method according to the present invention will be explained in detail. In the following explanation, it is assumed that a noise reducing device for carrying out the method of these embodiments is built into a portable telephone device. That is, assuming that the portable telephone device is used under a high-noise environment, the method of reducing the noise according to the embodiments of the present invention is applied to a noise reducing device for reducing the noise collected by a microphone along with the speech.

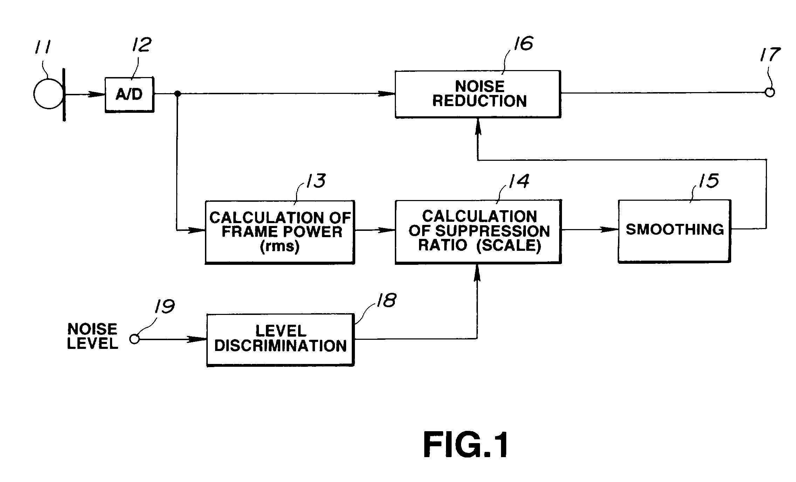

Fig.1 shows a noise reducing device to which the noise reducing device according to a first embodiment of the present invention is applied.

In Fig.1, a microphone 11 is employed as speech signal input means. This microphone collects not only the speech but also the noise such as external sound, wind or the like which is converted along with the speech into electrical signals.

An input signal from the microphone 11 is supplied to an analog/digital (A/D) converter 12 for converting the analog signal into a digital signal. The digital input signal x(n) from the A/D converter 12 is divided by frame forming means, not shown, into plural frames each being of a period of 20 msec and each being made up of 160 samples. The digital input signal is supplied frame-by-frame to a frame power calculating circuit 13 and a noise reducing circuit 16. The frame power calculating circuit 13 calculates, as the frame-based power of the speech signal, the mean power, for example, the root mean square (RMS) value, of the frame-based digital input signal x(n). The frame-based mean power value, calculated by the frame power calculating circuit 13, is supplied to a suppression ratio calculating circuit 14. The suppression ratio calculating circuit 14 calculates, using the mean frame power as calculated by the frame power calculating circuit 13, a suppression ratio which is a coefficient for noise suppression. The suppression ratio as found by the suppression ratio calculating circuit 14 is transmitted to a smoothing circuit 15 which smoothes the suppression ratio as found by the suppression ratio calculating circuit 14. By smoothing is meant the processing for eliminating discontinuous junction points in the input speech signal divided on the frame basis. The suppression ratio, thus smoothed, is transmitted to a noise reducing circuit 16 so as to be used therein for eliminating the noise in the digital input signal x(n) supplied from the A/D converter 12.

The suppression ratio calculating circuit 14 is fed with a control signal obtained by discriminating the noise level detection signal entering a terminal 19 by a level discrimination circuit 18. The threshold value for calculating the suppression ratio, for example, is changed over depending on this control signal.

The frame power calculating circuit 13 calculates the frame-based mean power of the digital input signal x (n). The mean power rms of each 160-sample frame of the digital input signal x(n) is calculated by the equation (1):

$$rms = \sqrt{\frac{1}{160}\sum_{n=0}^{159} x^2(n)} \qquad (1)$$

The mean power rms, calculated on the basis of the equation (1), is supplied to the suppression ratio calculating circuit 14.

The suppression ratio calculating circuit 14 compares the mean power rms to a certain threshold nr1 and, based on the results of comparison, calculates a suppression ratio (scale). That is, the suppression ratio (scale) is set to unity and to

$$scale = rms/K \qquad (2)$$

if the mean power rms is not less than and less than the threshold value nr1, respectively. In the above equation, K denotes a constant and equal to nr1 (K = nr1) in the present embodiment. Alternatively, the suppression ratio (scale) is calculated by the equation (2) for all of the rms values and, if the suppression ratio (scale), which is the result of calculations, is less than unity (scale < 1), the digital input signal x(n) is multiplied by the suppression ratio (scale) calculated by the equation (2). This is tantamount to multiplying the digital input signal x(n) by a gain less than unity for a frame in which the mean power rms is less than the threshold value nr1. If, as a result of the calculations of the equation (2), the suppression ratio becomes not less than unity (scale $\leq$ 1), the digital input signal x(n) is outputted directly, that is without any processing. This is tantamount to multiplying the digital input signal x(n) by a gain equal to unity for a frame in which the suppression ratio (scale) becomes equal to the threshold value. Thus, by suitably selecting the threshold value nr1, the gain is controlled to a smaller value for a small power portion, such as a noise portion, thus effectively achieving the noise reduction. The effect of noise suppression in case of employing the equation (2) becomes equal to 1/2 of the mean power of the input signal.

If the noise suppression is too intense or if the circuit of muting the sound lower than a pre-set level is used in combination, it is preferred to set a second threshold value nr2 smaller than the threshold value nr1, which is to be the first threshold, and to lower the suppression, that is to moderate the intensity of the expanding operation of an expander, for a region in which the input level becomes smaller than the second threshold value nr2.

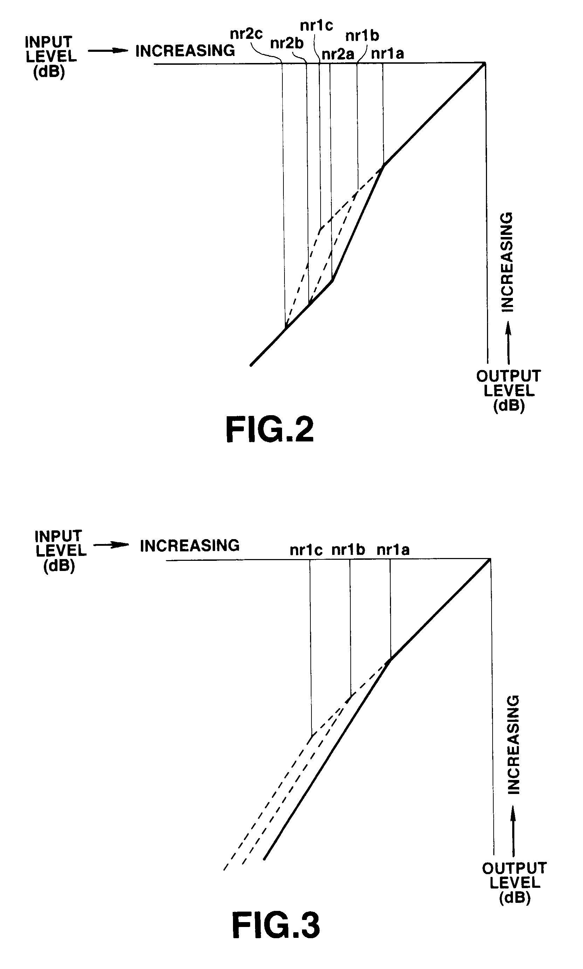

Fig.2 shows typical input/ output characteristics in case of reducing the effect of noise suppression in an input level region smaller than the second threshold value nr2. In this case, the output signal is obtained by multiplying the digital input signal x(n) by the suppression ratio value as found by the suppression ratio calculating circuit 4. In Fig.2, the input and output levels are plotted in dB on the abscissa and on the ordinate, respectively.

In Fig.2, there is shown a sort of expander characteristics in which, for the domain in which the above rms value indicating the input level, for example, is not less than a first threshold value nr1a on the abscissa, the gain is set to unity and, for the domain in which the input level becomes smaller than nr1a, the gain becomes smaller with decrease in the input level. On the other hand, for the domain in which the input level becomes smaller than a second threshold value nr2a lower than the first threshold value nr1a, the gradient of the curve is restored to the above-stated gradient corresponding to the unity gain, for example, or a fixed amount of attenuation. That is, for the domain in which the input level becomes smaller than the second threshold value nr2a, a fixed value of the suppression ratio

$$(\text{suppression ratio}) = nr2/nr1 \qquad (3)$$

independent of the rms value is used and multiplied with the input signal to give an output signal having the constant amount of attenuation. In such case, the input/ output characteristic curve, representing the output signal level in dB relative to the input signal level similarly in dB, is represented as a kinked line having two kinked points corresponding to the two threshold values nr1a and nr2a. This diminishes the unspontaneous feeling in the speech produced on noise suppression.

Besides, in Fig.2, a plurality of, herein three, sets of each of the first and second threshold values nr1, nr2, that is nr1a, nr2a, nr1b, nr2b, nr1c and nr2c, are pre-set and one of these sets of the threshold values is selected depending on a control signal produced on the basis of a noise level detection signal as later explained.

That is, for a noise level A as detected by, for example, a noise level detection circuit, two threshold values th1, th2 are set, where th1 > th2. These threshold values th1, th2 are set on a level discrimination circuit 18 as discrimination values. The level discrimination circuit 18 discriminates the noise level A from a terminal 19 by the threshold values th1, th2 and generates a changeover control signal which will select the set of the threshold values nr1a, nr2a for A ≥ th1, the set of the threshold values nr1b, nr2b for th1 > A ≥ th2 and the set of the threshold values nr1c, nr2c for th2 > A. The suppression ratio calculating circuit 14 selects one of the sets of the threshold values associated with the changeover control signal and, depending on the selected set of the threshold values, the suppression ratio calculating circuit 14 discriminates the mean frame power rms as the input level and calculates the noise suppression ratio.

This is tantamount to changing over the threshold of application of the noise suppression in plural stages responsive to the detected noise level to increase or decrease the threshold value when the environment is loud or quiet, respectively. Thus the extent of noise reduction is changed depending on the strength of the background noise at the site of telephone call so that the effect of noise reduction is decreased in a quiet environment for obviating the unspontaneous feeling due to the noise suppression and so that the effect of noise reduction is intensified in a loud environment for sufficiently decreasing the noise.

Assuming that the mean speech power rms over a frame of 20 msec is to be found by the above equation (1), with the maximum amplitude for the 16-bit digital signal data being 32767, the practical values of the threshold values of nr1a = 1024, nr2a = 512, nr1b = 512, nr2b = 256, nr1c = 256 and nr2c = 128 suffice. For the rms value of 512, the threshold value corresponds to approximately -33 dB for the full-scale sine wave of 0 dB.

On the other hand, if the threshold values th1, th2 of the background noise level A are expressed by the mean power over one frame as in the case of the rms, th1 and th2 can be set to 112 and 48, respectively (th1 = 112 and th2 = 48). These values correspond to the background noise levels of 70 dBA (about -40 dB) and 50 dBA, respectively.

It is also possible to employ input/ output characteristics in the form of kinked lines each having one kinked point, and to select the threshold values of the kinked lines nr1a, nr1b and nr1c on the basis of the above noise level. The ordinate and the abscissa of Fig.3 are the same as those of Fig.2. The suppression ratio of the region lower in level than the threshold values of the kinked lines of Fig.3 can be calculated from the above equation (2).

In addition, in a region wherein the input level is lower than the second threshold value nr2 smaller than the first threshold value nr1, an equation for calculation of the suppression ratio value

$$\text{(suppression ratio)} = \text{rms}^2/K' \tag{3'}$$

where K' is a constant, may be employed for further enhancing the noise suppression, that is for raising the expander operation. The noise suppression effect at this time is one-fourth of the mean power of the input signal.

Meanwhile, since the speech portion and the noise portion in the input signal are not processed separately, the tendency is for the speech to become absent in the region where the speech power in, for example, the consonants, is smaller. This tendency becomes pronounced when the noise reduction is applied most strongly, such that a highly alien feeling is induced depending on the speech type. Consequently, it becomes necessary to check into what strength of the noise reduction relative to the mean frame power is to be used or from which value of the input signal the noise reduction is to be applied. In the above embodiment of Fig.2, this phenomenon is prevented from occurring by changing the intensity of noise reduction in two stages depending on the input level.

On the other hand, if the above processing is performed frame-by-frame, the speech junction becomes non-conjunctive at the speech frames to induce an alien hearing feeling.

In this consideration, it may be contemplated to set the attack time or the recovery time for the suppression ratio value and to carry out the smoothing on the frame basis to eliminate the alien hearing feeling.

In the arrangement shown in Fig.1, the suppression ratio value as found by the suppression ratio calculating circuit 14 is smoothed by the smoothing circuit 15 before being transmitted to the noise reducing circuit 16.

The smoothing circuit 15 is provided for overcoming the problem induced in noise reduction as mentioned above, and sets the attack time and the recovery time. In the present embodiment, the attack time is set to "0" and the recovery time may be changed.

That is, if the speech power of the current frame as calculated is larger than that of the previous frame, the calculated frame power is directly employed. Conversely, if the speech power is smaller, it is smoothed by a low-pass filter (LPF) whose characteristics are shown in the equation (4)

$$S(n) = \text{Scale\_flt}_1 \times S(n-1)$$

$$+ \text{Scale\_flt}_2 \times \text{scale} \tag{4}$$

in order to eliminate the unspontaneous feeling of the processed speech caused by changes in the frame power.

The recovery time can be changed by changing the proportions of the coefficients scale-flt$_1$, scale-flt$_2$. If smoothing is performed in accordance with the equation (4), the recovery portion, above all, in the changing portion in the input speech can be changed smoothly. The suppression ratio value smoothed by the smoothing circuit 15 so as to be corrected for the unspontaneous feeling in the processed speech due to changes in the frame power is supplied to a noise reducing circuit 16.

The noise reducing circuit 16 multiplies the digital input signal x(n) supplied from the A/D converter 12 with the suppression ratio value supplied from the smoothing circuit 15 for outputting a noise-reduced output signal at an output terminal 17.

It is thus possible with the noise reducing device employing the noise reducing method according to the present first embodiment to carry out the noise reducing operation with a smaller signal processing quantity. On the other hand, since the input/ output characteristics as shown in Fig.2 are used, and the expanding operation is stopped at a minute input signal level smaller than the second threshold value, a more spontaneous playback sound is produced. Besides, since noise suppression operates only weakly where the environmental noise level is low, so that the expander is not in operation in vain, thus preventing deterioration in sound quality. Conversely, the expander operation may be intensified where the environmental noise level is higher, thereby further enhancing the noise suppression effect.

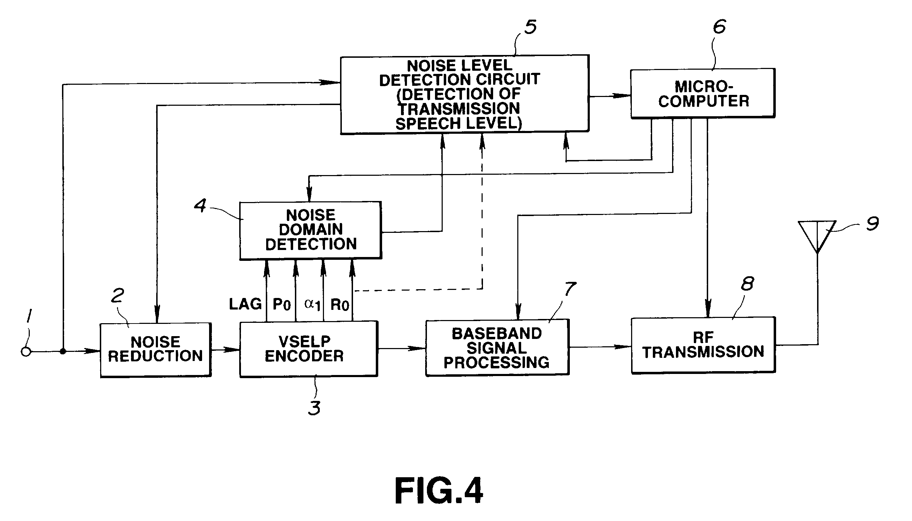

The above-described noise reducing device may be employed in, for example, a speech signal transmitting device shown for example in Fig.4. Such speech signal transmitting device is employed as a transmitting portion of a portable telephone device, and resorts to vector sum excited linear prediction (VSELP) for a speech coding method for compression of transmission data.

The technical contents of VSELP is disclosed in US Pat. No. 4,817,157. This technique is a sort of the code excited linear prediction (CELP). With the VSELP encoder, parameters such as the speech frame power, reflection and linear prediction coefficients, pitch frequency, codebook, pitch or the codebook gain, are analyzed, and the speech is encoded using these analytic parameters. A variety of speech encoding techniques may naturally be employed in addition to the VSELP.

In Fig.4, the input speech signal is collected by the above-mentioned microphone and converted by the A/D converter into a digital signal which is supplied to an input terminal 1. This input digital speech signal is supplied via the noise reducing circuit 2 shown in Fig.1 to a vector sum exited linear prediction (VSELP) encoder 3. The noise reducing circuit 2 may be made up of, for example, the frame power calculating circuit 13, the suppression ratio calculating circuit 14, the smoothing circuit 15, noise reducing circuit 16 and the level discrimination circuit 18 shown in Fig.1.

The porion of the circuit shown in Fig.4 generating the transmission signal is comprised of the VSELP encoder 3, a noise domain detection circuit 4 for detecting the background noise level using analytic parameters detected by the noise domain detection circuit 4 and a micro-computer 6 for controlling the volume of the received sound responsive to the noise level as detected by the noise level detection circuit 5.

With the speech encoding method employing the above-described VSELP encoder, high-quality speech transmission at a low bit rate is achieved by a codebook search by analysis-by-synthesis. With a speech encoding device for carrying out the speech encoding method employing the VSELP, that is a vocoder, the pitch or the like, as a characteristic of input speech signals, is excited by selecting the code vector stored in the codebook for encoding the speech. The parameters employed for encoding, such as the pitch frequency, include the frame power, reflection coefficients, linear prediction coefficients, codebook, pitch and codebook gain.

Among these analytic parameters, the frame power R0, pitch gain $P_0$ indicating the degree of strength of the pitch component, linear prediction coding coefficient $\alpha_1$ and the lag LAG of the pitch frequency, are employed for detecting the background noise. The frame power $R_0$ is utilized because the speech level becomes equal to the noise level only on extremely rare occasions, while the pitch gain $P_0$ is utilized because the environmental noise, assumed to be random, is thought to have the pitch only on extremely rare occasions.

On the other hand, the linear prediction encoding coefficient $\alpha_1$ is employed since which of the high-frequency component or the low-frequency component is stronger can be determined depending on whether or not the value of

$\alpha_1$ is large or small, respectively. The background noise is usually concentrated in the high-frequency region, and the background noise can be detected from the linear prediction encoding coefficient $\alpha_1$. This linear prediction encoding coefficient $\alpha_1$ is the sum of coefficients of inverse functions $Z_{-1}$ resulting from resolution of the direct higher-order FIR filter into a cascade of second-order FIR filters. Consequently, if the zero point $\Theta$ is in a range of $0 < \Theta < \pi/2$, the linear prediction encoding coefficient $\alpha_1$ becomes larger. Consequently, it may be said that, should $\alpha_1$ be larger or smaller than a pre-set threshold value, the signal energy is concentrated in a lower range and in a higher range, respectively.

The relation between the zero point $\Theta$ and the frequency is now explained.

If the sampling frequency is set to $\underline{f}$, the frequency of 0 to f/2 corresponds to the frequency of 0 to $\pi$ in a digital system, such as a digital filter. If the sampling frequency $\underline{f}$ is set to, for example, 8 kHz, the frequency 0 to 4 kHz corresponds to the frequency of 0 to $\pi$, so that $\pi/2 = 2$ kHz. Consequently, the smaller the value of $\Theta$, the lower becomes the frequency range. On the other hand, the smaller the value of $\Theta$, the larger becomes the value of $\alpha_1$. Thus, which of the low-frequency component or the high frequency component is stronger can be determined by checking the relation between the value of $\alpha_1$ and the pre-set threshold value.

The noise domain detection circuit 4 receives the above-mentioned analytic parameters, that is the frame power $R_0$, the pitch gain indicating the degree of intensity of the pitch component, the linear prediction encoding coefficient $\alpha_1$ and the lag LAG in the pitch frequency, from the VSELP encoder 3, for detecting the noise domain. This is effective in avoiding the increase in the processing quantity since there is a limitation imposed on the size of the digital signal processor (DSP) or the memory in order to keep up with the tendency towards reduction in size of the portable telephone device.

The noise level detection circuit 5 detects the speech level, that is the transmission speech level, in the noise domain detected by the noise domain detection circuit 4. The detected transmission speech level may be the value of the frame power $R_0$ of the frame ultimately judged to be the noise domain by the noise domain detection circuit based on judgment employing the analytic parameters. However, since there is the possibility of mistaken detection, the frame power $R_0$ is routed to a 5-tap minimum value filter, as will be explained subsequently.

The micro-computer 6 controls the timing of the noise domain detection by the noise domain detection circuit 4 and the timing of the noise level detection by the noise level detection circuit 5, while controlling the volume of the playback speech responsive to the noise level.

In the above-described arrangement of Fig.4, the digital speech input signal from the input terminal 1 is routed to the noise reducing circuit 2 where noise reduction is carried out as explained in connection with Figs.1 and 2. The digital speech input signal thus processed is then supplied to the VSELP encoder 3, which then analyzes the input signal, now digitized, and proceeds to information compression and encoding. At this time, the analytic parameters such as the frame power, reflection coefficient, linear prediction coefficient, pitch frequency, codebook, pitch and the codebook gain of the input speech signal, are employed.

The data compressed and encoded by the VSELP encoder 3 is fed to a baseband signal processing circuit 7 where the synchronization signal, framing and error correction signal are appended to the data. Output data of the baseband signal processing circuit 7 is fed to an RF transmission and reception circuit 8 where the data is modulated to a suitable frequency for transmission over an antenna 9.

Among the analytic parameters employed by the VSELP encoder 3, the frame power $R_0$, the pitch gain indicating the degree of intensity of the pitch component, the linear prediction encoding coefficient $\alpha_1$ and the lag LAG in the pitch frequency, are supplied to the noise domain detection circuit 4. The noise domain detection circuit 4 detects the noise domain using the frame power $R_0$, the pitch gain indicating the degree of intensity of the pitch component, the linear prediction encoding coefficient $\alpha_1$ and the lag LAG in the pitch frequency. The information ultimately determined to be the noise domain by the noise domain detection circuit 4, that is the flag information, is supplied to the noise level detection circuit 5.

The noise level detection circuit 5 is also fed with the digital input signal from the A/D converter 2 and detects the signal level of the noise domain responsive to the flag information. The signal level may be the frame power $R_0$ as mentioned above.

The noise level data detected by the noise level detection circuit 5 is supplied to the micro-computer 6 as a controlling part, whole also being fed to the noise reducing circuit 2. In the noise reducing circuit 2, the noise level data is supplied via a terminal 19 shown for example in Fig.1 to the level discrimination circuit 18 where the changeover control signal subject to level discrimination by the threshold values th1 and th2 is formed for switching selection of the threshold value of the input level by the suppression ratio calculating circuit 14.

Detection of the noise level by the noise level detection circuit 5 according to the present embodiment is now explained.

First, the domain in which to detect the noise level needs to be a noise domain as detected by the noise level detection circuit 4. The timing of detecting the noise domain is controlled by the controller 6, as explained previously. The noise domain detection is performed in order to assist the noise level detection by the noise level detection circuit 5. That is, decision is given as to whether a frame under consideration is a voiced sound or the noise. If the frame is found to be a noise, it becomes possible to detect the noise level. As a matter of course, detection of the noise level may be achieved more accurately if there exists only the noise. Consequently, the speech level entering the transmitting microphone 1 in the absence of the transmitted speech input is detected by the noise level detection circuit 5 as transmitted speech level detection means.

An initial value of the noise level of -20 dB is first set with respect to a sound volume level as set by the user. If the noise level detected in a manner as later explained is found to be larger than the initial set value, the playback sound volume level on the receiving side is increased.

The noise level can be detected easily if the frame-based input voice sound is within the background noise domain. For this reason, the sound received directly after the turning on of the transmitting power source of the transmitting section, the sound received during the standby state for a reception signal of the transmitting section, and the sound received during call with the sound level at the receiving side being lower than a pre-set level, is regarded as being the background noise, and detection is made of the frame noise level during this time.

The transmitting call power source of the transmitting section being turned on is an indication that the user is willing to start using the present portable telephone set. In the present embodiment, the inner circuitry usually makes a self-check. When next the user stretches out the antenna 9, the telephone set enters the stand-by state, after verifying that the interconnection with a base station has been made. Since the input voice sound from the user is received only after the end of the series of operations, there is no likelihood that the user utters the voice sound to the microphone during this time. Consequently, if the transmitting microphone 1 is used during this series of operations, the detected sound level is the surrounding noise level, that is the background noise level. Similarly, the background noise level may be detected during or directly after the user has made a transmitting operation (dialing operation) directly before starting the call.

The standby state for a reception signal of the transmitting section means the state in which the call signal from the called party is being awaited with the power source of the receiving section having been turned on. Such state is not the actual call state, so that it may be assumed that there is no voice sound of conversation between the parties. Thus the background noise level may be detected if the surrounding sound volume level is measured during this standby state using the transmitting microphone. It is also possible to make such measurements a number of times at suitable intervals and to average the measured values.

It is seen from above that the background noise level may be estimated from the sound level directly after the turning on of the transmitting power source of the transmitting section, and the sound received during the standby state for a reception signal of the transmitting section, and conversation may be started subject to speech processing based upon the estimated noise level. It is however preferred to follow subsequent changes in the background noise level dynamically even during the conversatipn over the telephone. For this reason, the background noise level is detected responsive also to the speech level at the receiving section during talk over the telephone.

It is preferred that such detection of the noise level on the receiving section during the conversation be carried out after detecting the noise domain by the analytic parameters employed by the receiving side VSELP encoder 3, as explained previously.

Since noise detection may be made more accurately when the level of the monitored frame power $R_0$ is higher than a reference level or when the called party is talking, the reproduced sound volume when the called party is talking may be controlled on the real time basis thereby realizing more agreeable call quality.

Thus, in the present embodiment, the controller 6 controls the detection timing of the noise domain detection circuit 4 and the noise level detection circuit 5 so that detection will be made directly after turning on of the transmitting power source of the transmitting section, during the standby state of reception signals of the transmitting section and during talk over the telephone set when the voice sound is interrupted.

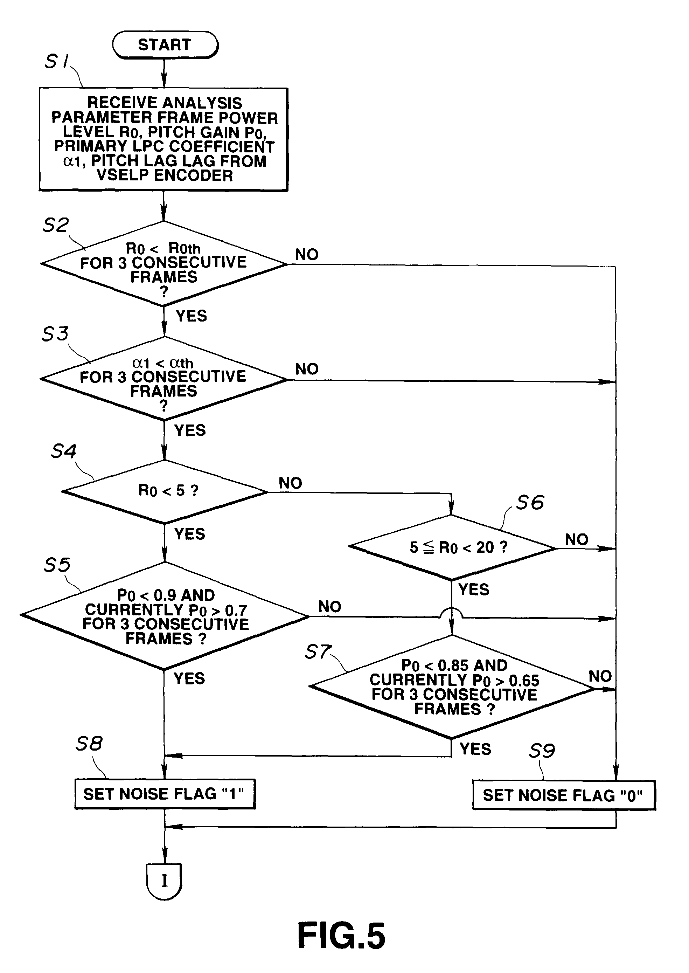

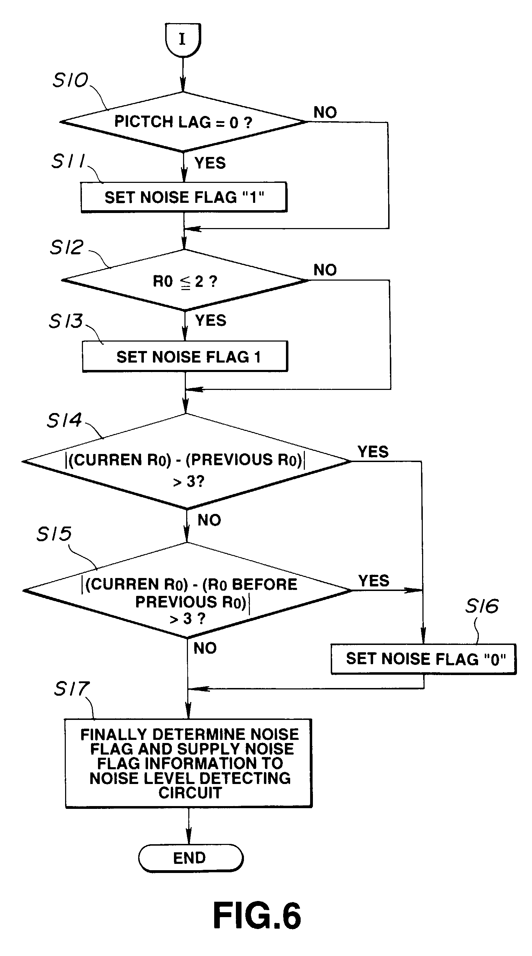

The operation of detecting the noise domain by the noise domain detection circuit 4 is now explained by referring to the flow chart shown in Figs.5 and 6.

After the flow chart of Fig.5 is started, the noise domain detection circuit 4 receives the frame power $R_0$, pitch gain $P_0$, indicating the magnitude of the pitch component, first-order linear prediction coefficient $\alpha_1$ and the lag of the pitch frequency LAG from the VSELP encoder 3.

In the present embodiment, decision in each of the following steps by the analytic parameters supplied at the step S1 is given in basically three frames because such decision given in one frame leads to frequent errors. If the ranges of the parameters are checked over three frames, and the noise domain is located, the noise flag is set to "1". Otherwise, the error flag is set to "0". The three frames comprise the current frame and two frames directly preceding the current frame.

Decisions by the analytic parameters through these three consecutive frames are given by the following steps.

At a step S2, it is checked whether or not the frame power $R_0$ of the input voice sound is lesser than a pre-set threshold $R_{0th}$ for the three consecutive frames. If the result of decision is YES, that is if $R_0$ is smaller than $R_{0th}$ for three consecutive frames, processing transfers to a step S3. If the result of decision is NO, that is if $R_0$ is larger than $R_{0th}$ for the three consecutive frames, processing transfers to a step S9. The preset threshold $R_{0th}$ is the threshold for noise, that is a level above which the sound is deemed to be a voice instead of the noise. Thus the step S2 is carried out in order to check the signal level.

At a step S3, it is checked whether or not the first-order linear prediction coefficient $\alpha_1$ of the input voice sound is smaller for three consecutive frames than a pre-set threshold $\alpha_{the}$. If the result of decision is YES, that is if $\alpha_1$ is smaller than $\alpha_{the}$ for three consecutive frames, processing transfers to a step 54. Conversely, if the result of decision is NO, that is if $\alpha_1$ is larger than $\alpha_{the}$ for three consecutive frames, processing transfers to a step S9. The pre-set threshold $\alpha_{the}$ has a value which is scarcely manifested at the time of noise analysis. Thus the step S3 is carried out in order to check the gradient of the speech spectrum.

At a step S4, it is checked whether or not the value of the frame power $R_0$ of the current input speech frame is smaller than "5". If the result of decision is YES, that is if $R_0$ is smaller than 5, control proceeds to a step S5. Conversely, if the result of decision is NO, that is if $R_0$ is larger than 5, control proceeds to a step S6. The reason the threshold is set to "5" is that the possibility is high that a frame having a frame power $R_0$ larger than "5" is a voiced sound.

At a step S5, it is checked whether or not the pitch gain $P_0$ of the input speech signal is smaller than 0.9 for three consecutive frames and the current pitch gain $P_0$ is larger than 0.7. If the result is YES, that is if it is found that the pitch gain $P_0$ is smaller than 0.9 for three consecutive frames and the current pitch gain P0 is larger than 0.7, control proceeds to a step S8. Conversely, if the result of decision is NO, that is if it is found that the pitch gain $P_0$ is larger than 0.9 for three consecutive frames and the current pitch gain $P_0$ is larger than 0.7, control proceeds to a step S8. The steps S3 to S5 check the intensity of pitch components.

At a step S6, it is checked, responsive to the negative results of decision at the step S4, that is that $R_0$ is 5 or larger, whether or not the frame power $R_0$ is not less than 5 and less than 20. If the result is YES, that is if $R_0$ is not less than 5 and less than 20, control proceeds to a step S7. If the result is NO, that is if $R_0$ is not in the above range, control proceeds to a step S9.

At the step S7, it is checked whether or not the pitch gain $P_0$ of the input speech signals is smaller than 0.85 for three consecutive frames and the current pitch gain $P_0$ is larger than 0.65. If the result is YES, that is if the pitch gain $P_0$ of the input speech signals is smaller than 0.85 for three consecutive frames and the current pitch gain $P_0$ is larger than 0.65, control proceeds to a step S8. Conversely, if the result is NO, that is if the pitch gain $P_0$ of the input speech signals is larger than 0.85 for three consecutive frames and the current pitch gain $P_0$ is smaller than 0.65, control proceeds to a step S9.

At the step S8, responsive to the result of decision of YES at the step S5 or S7, the noise flag is set to "1". With the noise flag set to "1", the frame is set as being the noise.

If the decisions given at the steps S2, S3, S5, S6 and S7 are NO, the noise flag is set at the step S9 to "0", and the frame under consideration is set as being the voice sound.

The steps S10 et seq. are shown in the flow chart of Fig.6.

At a step S10, a decision is given as to whether or not the pitch lag LAG of the input speech signal is 0. If the result of decision is YES, that is if LAG is 0, the frame is set as being the noise because there is little possibility of the input signal being the voice sound for the pitch frequency LAG equal to 0. That is, control proceeds to a step S11 and sets a noise flag to "1". If the result is NO, that is if LAG is not 0, control proceeds to a step S12.

At the step S12, it is checked whether or not the frame power $R_0$ is 2 or less. If the result is YES, that is if $R_0$ is 2 or less, control proceeds to a step S13. If the result is NO, that is if $R_0$ is larger than 2, control proceeds to a step S14.

At the step S12, it is checked whether or not the frame power $R_0$ is 2 or less. If the result is YES, that is if $R_0$ is 2 or less, control proceeds to a step S13. If the result is NO, that is if $R_0$ is larger than 2, control proceeds to a step S14. At the step S13, it is checked whether the frame power $R_0$ is significantly small. If the result is YES, the noise flag is set to "1" during the next step S13, and the frame is set as being a noise.

At the step S13, similarly to the step S11, the noise flag is set to "1", in order to set the frame as being the noise.

At the step S14, the frame power $R_0$ of a frame directly previous to the current frame is subtracted from the frame power $R_0$ of the current frame, and it is checked whether or not the absolute value of the difference exceeds 3. The reason is that, if there is an acute change in the frame power $R_0$ between the current frame and the temporally previous frame, the current frame is set as being the voice sound frame. That is, if the result at the step S14 is YES, that is if there is an acute change in the frame power $R_0$ between the current frame and the temporally previous frame, control proceeds to a step S16, in order to set the noise flag to "0" and the current frame is set as being the voice sound frame. If the result is NO, that is if a decision is that there is no acute change in the frame power $R_0$ between the current frame and the temporally previous frame, control proceeds to a step S15.

At the step S15, the frame power $R_0$ of a frame previous to the frame directly previous to the current frame is subtracted from the frame power $R_0$ of the current frame, and it is checked whether or not the absolute value of the difference exceeds 3. The reason is that, if there is an acute change in the frame power $R_0$ between the current frame and the frame previous to the directly previous frame, the current frame is set as being the voice sound frame. That is, if the result at the step S15 is YES, that is if there is an acute change in the frame power $R_0$ between the current frame and the frame previous to the frame directly previous to the current frame, control proceeds to a step S16, in order to set the noise flag to "0" and the current frame is set as being the voice sound frame. If the result is NO, that is if a decision is that there is no acute change in the frame power $R_0$ between the current frame and frame previous to the frame previous to the current frame, control proceeds to a step S17.

At the step S17, the noise flag is ultimately set to "0" or "1", and the corresponding information is supplied to the noise level detection circuit 5.

The noise level detection circuit 5 detects the voice sound level of the noise domain depending on the flag information obtained by the operation at the noise domain detection circuit 4 in accordance with the flow chart shown in Figs.5 and 6.

In detecting the noise domain or the noise level as described above, the noise reducing circuit may be used in combination with the above-described VSELP encoder 3, whereby the background noise level may be detected using output parameters of the VSELP encoder 3, such that only minute additional arrangement or additional signal processing for noise level detection suffices. On the other hand, if the noise reducing device is applied to a portable telephone device, the device enclosed in the telephone device for automatic adjustment of the received sound volume, not shown, may be used directly as the noise level detection circuit, so that there is no necessity of annexing a new dedicated circuit.

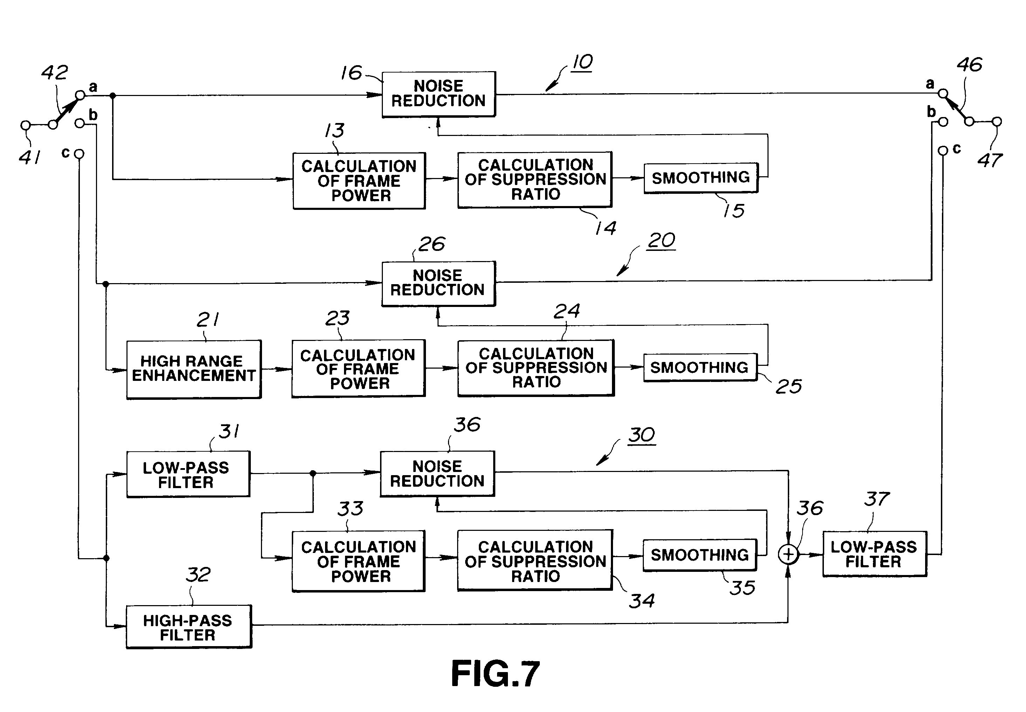

The noise reducing method according to a second embodiment of the present invention, in which a plurality of noise reducing algorithms are set in advance and switched in a controlled manner depending on the detected noise level, is hereinafter explained. Fig.7 shows an arrangement of essential portions of the noise reducing device for carrying out the noise reducing method.

Referring to Fig.7, there are shown circuits 10, 20 and 30 associated with respective different noise-reducing algorithms. One of these circuits 10, 20 and 30 is selected by changeover switches 42, 47 operatively connected to each other. The changeover switches 42, 47 are changed over in an interlocked manner by the changeover signal on the basis of the detected noise level so that one of the circuits 10, 20 and 30 is connected in circuit across an input terminal 41 and an output terminal 47. The input digital speech signal x(n) is supplied from the A/D converter 12 of Fig.1 to the input terminal 41, while the output signal from the output terminal 47 is supplied to the VSELP encoder 3 shown in Fig.4.

The fist circuit 10 shown in Fig.7 is a noise reducing circuit by the basic algorithm employing the circuits 13 to 16 shown in Fig.1. The threshold value of the input level at the time of calculation in the suppression ratio calculating circuit 14 is set so as to be constant. The circuit 20 implements the algorithm for enhancing the high frequency domain of the input signal for the calculation of the noise suppression ratio, while the circuit 30 implements the algorithm of performing noise reduction only on the low frequency component of the input speech signal and summing the noise-reduced low-frequency component to the high-frequency component of the original input speech signal.

The circuit 10 is not explained since it is substantially the same as the first embodiment shown in Fig.1 except that there is no necessity of providing for a variable threshold value of the input level for the calculation of the noise suppression ratio in the suppression ratio calculation circuit 14. The circuit 10 is connected between a fixed terminal a of the input side changeover switch 42 and a fixed terminal a of an output side changeover switch 46.

The circuit 20 calculates the noise suppression ratio using a signal resulting from high-frequency enhancement of the input digital signal x(n) from a fixed terminal b of the changeover switch 42. A high-frequency enhancement filter 21 is connected upstream of the frame power calculating circuit 23 for high-frequency high-frequency enhancement. The consonants having a larger energy are processed with only weak noise reduction.

If a filter output of the high-frequency enhancement filter 21 is expressed as y(n), the filter output y(n) becomes

$$y(n) = 2x(n) - x(n\text{-}1)$$

The frame power calculating circuit 23 calculates the frame power rms using the filter output y(n) in place of x(n) in the equation (1).

The frame power rms calculated by the frame power calculating circuit 23 is supplied to a suppression ratio calculating circuit 24 so as to be used for the calculation of the suppression ration value (scale) as in the above equation (2). The calculation of the suppression ratio value (scale) by the suppression ratio calculating circuit 24 is not explained since it is similar to that in the first embodiment explained previously.

The suppression ratio value obtained by the suppression ratio calculating circuit 24 is supplied via the smoothing circuit 25 to the noise reducing circuit 6.

The noise reducing circuit 6 multiplies the digital input signal x(n) from the fixed terminal b of the changeover switch 42, that is the original input signal not processed with high-frequency enhancement, with the suppression ratio value supplied via the smoothing circuit 25, for reducing the noise in the input signal x(n), and transmits the noise-reduced output signal to a fixed terminal b of the changeover switch 46.

The circuit 20 performs the noise-reducing operation using the noise suppression ratio on the basis of the high-frequency-enhanced signal. Thus the noise-reducing operation becomes operative for the entire frequency spectrum of the input speech signal. However, the noise-reducing operation may be made to be effective only to a lesser extent on the consonant parts having the larger frequency side energy for diminishing the alien feeling caused by the disappearance of the consonants.

The circuit 30 of Fig.7 divides the frequency spectrum of the digital input signal x(n) from a fixed terminal c of the input side changeover switch 42 into a higher frequency range and a lower frequency range and performs a noise-reducing operation only on the low frequency component. The circuit 30 then sums the noise-reduced low-frequency component to the high-frequency component of the original input signal x(n) and transmits the resulting sum signal to a fixed terminal c of the output side changeover switch 46.

The circuit 30 has a low-pass filter 31 and a high-pass filter 32 connected in parallel to each other to a fixed terminal c of the changeover switch 42. The low-pass filter 31 and the high-pass filter transmit the low-frequency component and the high-frequency component of the digital input signal x(n), respectively. Only the low-frequency component is processed with the noise-reducing operation, while the high-frequency component is not processed in this manner. The reason is that the consonants with a small power are contained in the high-frequency component in a larger quantity than in the low-frequency component, such that, if the noise-reducing operation is performed on the high-frequency component, the consonants are simultaneously suppressed and hence the speech exhibiting an alien feeling is produced.

If the filter output of the low-pass filter 31 is expressed as $y(n)_L$, the filter output $y(n)_L$ becomes

$$y(n)_L = \frac{x(n) + x(n-1)}{2} \qquad (5)$$

On the other hand, the filter output $y(n)_H$ becomes

$$y(n)_H = \frac{x(n) - x(n-1)}{2} \qquad (6)$$

The filter output $y(n)_L$ of the low-pass filter 31 is supplied to a frame power calculating circuit 33 and a noise-reducing circuit 36 similar to those shown in Fig.1. That is, the frame power calculating circuit 33 calculates the mean frame power rms using the filter output $y(n)_L$ of the low-pass filter 31 in place of x(n) of the equation (1).

The mean frame power rms calculated by the frame power calculating circuit 33 is supplied to the suppression ratio calculating circuit 34 so as to be used for calculating the suppression ratio value as in the equation (2). The explanation on the calculation of the suppression ratio value by the calculating circuit 34 is not made for avoiding redundancy.

The suppression ratio value, corrected as to the unspontaneous feeling in the processed speech due to changes in the frame power, is transmitted to the noise reducing circuit 36 which multiplies the filter output y(n) supplied from the low-pass filter 31 by the suppression ratio value supplied via the smoothing circuit 35 by way of performing noise reduction on the filter output $y(n)_L$ which is the low-frequency component of the input signal x(n). The noise-reduced output signal $y(n)_L$ is supplied to an additive node 36.

The additive node 36 is also fed with the filter output $y(n)_H$ of the high-pass filter 32. The additive node 36 adds the noise-reduced filter output $Y(n)_L$ to the non-noise-reduced filter output $y(n)_H$ and transmits the resulting sum signal to a low-pass filter 37.

The low-pass filter 37 is employed in order to prevent the sound of the high-frequency component from becoming pronounced inasmuch as the sum output $(Y(n)_L + y(n)_H)$ is the non-noise-reduced filter output. Specifically, the transfer function H(Z) of the low-pass filter 37 becomes

$$H(z) = \frac{1}{1 - \alpha Z^{-1}} \qquad (7)$$

where $\alpha$ is a constant. The characteristics of the low-pass filter 37 are changed by changing the value of $\alpha$. The low-pass filter 37 transmits an output signal whose high frequency component is suppressed by filtering, that is the noise-reduced output signal, to the fixed terminal c of the output side changeover switch 46.

In this manner, since the noise-reducing operation is performed only on the low-frequency component, while it is not performed on the high-frequency component where the consonant energy is thought to be higher, there is no risk of the consonant part being attenuated along with the noise, or of the high-frequency sound exclusively being enhanced, the playback sound may be produced which is susceptible only to extremely minute sound quality deterioration as compared to the original sound.

The changeover control signal for switching selection of the three circuits 10, 20 and 30 associated with the above-described three noise-reducing algorithms may be found by level discrimination with the aid of the two threshold values th1, th2, where th1 > th2, using the level discrimination circuit 18 shown in Fig.1, on the basis of the noise level A from the noise level detection circuit 5 shown in Fig.4.

Thus it suffices to select the fixed terminal a and hence the circuit 10, the fixed terminal b and hence the circuit 20, and the fixed terminal c and hence the circuit 30, for A ≥ th1, th1 > A ≥ th2 and for th2 > A, respectively.

It becomes possible in this manner to intensify the noise-reducing operation for the larger background noise and to weaken the noise-reducing operation for the lower background noise, in order to suppress the unspontaneous hearing feeling.

The present invention is not limited to the above-described first and second embodiments. For example, it is possible to provide for plural noise-reducing algorithms of plural input/ output characteristics having different profiles of input/ output characteristic curves and to select one of the algorithms of the different input/ output characteristics responsive to the changeover control signal based upon the noise level. On the other hand, various other speech encoders than the above-described VSELP encoder, such as the multi-pulse excited linear prediction speech encoder, as explained in JP Patent Kokai (Laid-Open) Publication 60-70500 (1985), may be employed. In addition, the noise reducing device for carrying out the noise reducing method according to the present invention may find use in other than the portable telephone device.

## Claims

1. A method for reducing the noise contained in an input speech signal comprising the steps of

   detecting the level of a noise component contained in the input speech signal to form a control signal depending on the detected noise level; and
   carrying out a noise reducing operation on the input speech signal; characterised in that the noise reducing operation comprises the steps of:
   selecting one of a plurality of processing algorithms depending on said control signal, said processing algorithms being
   a first noise reducing algorithm for calculating a suppression ratio depending on the level of said input speech signal level and multiplying said input speech signal to the calculated suppression ratio,
   a second noise reducing algorithm of calculating a suppression ratio depending on the level of a signal corresponding to said input speech signal whose high-frequency component is enhanced and multiplying said signal by the calculated suppression ratio, and
   a third noise reducing algorithm of performing a noise-reducing operation only on the low-frequency component of the input speech signal and adding the noise-reduced low-frequency component to the high-frequency component of the input speech signal.

2. A method according to claim 1 wherein said noise reducing step includes carrying out a level expansion to produce different effects using a threshold value of the signal level of the input speech signal as a boundary, said threshold being modified depending on said control signal.

3. A method according to claim 2 wherein said noise reducing step includes diminishing the level expanding effect for input speech signal levels not higher than said threshold value.

4. A method according to claim 2 or 3 wherein said noise reducing step includes carrying out a level expansion to give different effects for plural threshold values of said input speech signal level as the boundaries.

5. A method according to claim 1, 3 or 4 wherein said noise reducing step includes the steps of

   detecting the mean power of the input speech signal for each of plural unit time periods as said input speech signal level,

6. A method according to claim 5 wherein said noise reducing step includes the step of

   smoothing said signal suppression ratio within said unit time period.

7. A method according to claim 6 wherein said noise reducing step includes the step of

enhancing the smoothing effect when the input speech signal level is smaller than the level of the previous unit time period.

8. A method according to any one of the preceding

claims further comprising the step of compression-encoding the speech signal and detecting the level of the noise component in the input speech signal in the noise level detection step using encoding parameters obtained by said compression-encoding step.

9. An apparatus for reducing the noise in an input speech signal, the apparatus having a microphone (11) to which the input speech signal enters and noise reducing means (16, 26, 36) for reducing the noise contained in the input speech signal, said apparatus comprising.

noise level detection means (18) for detecting the level of a noise component in said input speech signal and outputting a control signal responsive to the detected noise level, and
means to carrying out a noise-reducing operation on the input speech signal, characterised in that said noise-reducing means comprises plural processing means (16, 26, 36) having respective processing algorithms and selects one of them depending on said control signal, said processing algorithms being
a first noise reducing algorithm of calculating a suppression ratio depending on the level of said input speech signal level and multiplying said input speech signal with the calculated suppression ratio,
a second noise reducing algorithm of calculating a suppression ratio depending on the level of a signal corresponding to said input speech signal whose high-frequency component is enhanced and multiplying said input speech signal with the calculated suppression ratio, and
a third noise reducing algorithm of performing a noise-reducing operation only on the low-frequency component of the input speech signal and adding the noise reduced low-frequency component to the high-frequency component of the input speech signal.

10. An apparatus according to claim 9 wherein said noise-reducing means includes level detection means (13) for detecting the signal level of the input speech signal, said noise level reducing means (16) carries out a level expansion which gives different effects with a threshold value of the input speech signal level as a boundary and modifies the threshold value responsive to said control signal.

11. An apparatus according to claim 10 wherein said noise-reducing means (16) diminishes the effect of level expansion for input speech signal levels detected by said levels detection means that are not higher than said threshold value.

12. An apparatus according to claim 10 wherein said noise-reducing means (16) performs a level expansion which will give a different effect for each of a plurality of threshold values of said input speech signal.

13. An apparatus according to claim 9, 10, 11 or 12 wherein said noise-reducing means comprises

level detection means (13) for detecting the mean power of the input speech signal for each unit time period as the signal level of the input speech signal,
suppression ratio setting means (14) for setting a signal suppression ratio responsive to the detected signal level of the input speech signal and said control signal, and
arithmetic-logical means (16) for multiplying said input signal level by said suppression ratio by way of carrying out a noise-reducing operation.

14. An apparatus according to claim 13 wherein said noise reducing means comprises

smoothing means (15) for receiving the signal suppression value and smoothing the received signal suppression ratio within said unit time period.

15. An apparatus according to claim 14 wherein said smoothing means (15) enhances the smoothing effect when the detected signal level is smaller than the level for the previous unit time period.

16. An apparatus according to any one of claims 9 to 15 further comprising

EP 0 661 689 B1

compression-encoding means for compression-encoding the input speech signals, said noise detection means detecting the level of the noise component in the input speech signal using encoding parameters obtained from said speech compression encoding means.

**17.** A telephone apparatus having a microphone to which a speech signal is input, and apparatus for reducing the noise contained in the speech signal according to any one of claims 9 to 16.

**Patentansprüche**

**1.** Verfahren zur Verringerung des Geräusches, das in einem Eingangs-Sprachsignal enthalten ist, mit Schritten zum

Erfassen des Pegels einer Geräuschkomponente, die in dem Eingangs-Sprachsignal enthalten ist, um ein Steuersignal zu bilden, das von dem erfaßten Geräuschpegel abhängt, und
Ausführen einer Geräuschverringerungs-Operation an dem Eingangs-Sprachsignal,

dadurch **gekennzeichnet,** daß die Geräuschverringerungs-Operation Schritte umfaßt zum

Auswählen eines aus einer Vielzahl von Verarbeitungs-Algorithmen in Abhängigkeit von dem Steuersignal, wobei die Verarbeitungs-Algorithmen sind:
ein erster Geräuschverringerungs-Algorithmus zum Berechnen eines Unterdrückungsverhältnisses, das von dem Pegel des Eingangs-Sprachsignals abhängig ist, und Multiplizieren des Eingangs-Sprachsignals mit dem berechneten Unterdrückungsverhältnis,
ein zweiter Geräuschverringerungs-Algorithmus zum Berechnen eines Unterdrückungsverhältnisses, das von dem Pegel eines Signals abhängig ist, welches dem Eingangs-Sprachsignal entspricht, dessen Hochfrequenzkomponente vergrößert ist, und Multiplizieren des Signals mit dem berechneten Unterdrückungsverhältnis und ein dritter Geräuschverringerungs-Algorithmus zum Durchführen einer Geräuschverringerungs-Operation nur an der Niederfrequenzkomponente des Eingangs-Sprachsignals und Addieren der Niederfrequenzkomponente, an der die Geräuschverringerung durchgeführt wurde, zu der Hochfrequenzkomponente des Eingangs-Sprachsignals.

**2.** Verfahren nach Anspruch 1, bei dem der Geräuschverringerungs-Schritt das Ausführen einer Pegelerweiterung zum Erzeugen verschiedener Wirkungen unter Benutzung eines Schwellenwerts des Signalpegels des Eingangs-Sprachsignals als eine Grenze enthält, wobei die Schwelle in Abhängigkeit von dem Steuersignal modifiziert wird.

**3.** Verfahren nach Anspruch 2, bei dem der Geräuschverringerungs-Schritt eine Verringerung der Pegelerweiterungswirkung für Eingangs-Sprachsignalpegel, die nicht höher als der Schwellenwert sind, enthält.

**4.** Verfahren nach Anspruch 2 oder 3, bei dem der Geräuschverringerungs-Schritt das Ausführen einer Pegelerweiterung zum Ergeben verschiedener Wirkungen für eine Mehrzahl von Schwellenwerten des Eingangs-Sprachsignalpegels als die Grenzen enthält.

**5.** Verfahren nach Anspruch 1, 3 oder 4, bei dem der Geräuschverringerungs-Schritt Schritte enthält zum

Erfassen der Durchschnittsleistung des Eingangs-Sprachsignals für jede einer Mehrzahl von Einheitszeitperioden als der Eingangs-Sprachsignalpegel.

**6.** Verfahren nach Anspruch 5, bei dem der Geräuschverringerungs-Schritt einen Schritt enthält zum

Glätten des Signal-Unterdrückungsverhältnisses innerhalb der Einheitszeitperiode.

**7.** Verfahren nach Anspruch 6, bei dem der Geräuschverringerungs-Schritt einen Schritt enthält zum

Vergrößern der Glättungswirkung, wenn der Eingangs-Sprachsignalpegel kleiner als der Pegel der früheren Einheitszeitperiode ist.

**8.** Verfahren nach einem der vorhergehenden Ansprüche, das ferner einen Schritt umfaßt zum

14

Komprimierungskodieren des Sprachsignals und Erfassen des Pegels der Geräuschkomponente in dem Eingangs-Sprachsignal in dem Geräuschpegelerfassungs-Schritt unter Benutzung von Kodierungsparametern, die durch den Komprimierungskodierungs-Schritt gewonnen sind.

9. Vorrichtung zur Verringerung des Geräusches in einem Eingangs-Sprachsignal, wobei die Vorrichtung ein Mikrofon (11), welches das Eingangs-Sprachsignal aufnimmt, und Geräuschverringerungs-Mittel (16, 26, 36) zur Verringerung des Geräusches hat, das in dem Eingangs-Sprachsignal enthalten ist, welche Vorrichtung umfaßt:

ein Geräuschpegel-Erfassungsmittel (18) zum Erfassen des Pegels einer Geräuschkomponente in dem Eingangs-Sprachsignal und Ausgeben eines Steuersignals, das auf den erfaßten Geräuschpegel anspricht, und ein Mittel zum Ausführen einer Geräuschverringerungs-Operation an dem Eingangs-Sprachsignal,

dadurch **gekennzeichnet,** daß das Geräuschverringerungs-Mittel eine Mehrzahl von Verarbeitungs-Mitteln (16, 26, 36) umfaßt, die jeweilige Algorithmen haben, und einen davon in Abhängigkeit von dem Steuersignal auswählt, wobei die Verarbeitungs-Algorithmen sind:

ein erster Geräuschverringerungs-Algorithmus zum Berechnen eines Unterdrückungsverhältnisses, das von dem Pegel des Eingangs-Sprachsignalpegels abhängig ist, und Multiplizieren des Eingangs-Sprachsignals mit dem berechneten Unterdrückungsverhältnis,
ein zweiter Geräuschverringerungs-Algorithmus zum Berechnen eines Unterdrückungsverhältnisses, das von dem Pegel eines Signals abhängig ist, welches dem Eingangs-Sprachsignal entspricht, dessen Hochfrequenzkomponente vergrößert ist, und Multiplizieren des Eingangs-Sprachsignals mit dem berechneten Unterdrükkungsverhältnis und
ein dritter Geräuschverringerungs-Algorithmus zum Durchführen einer Geräuschverringerungs-Operation nur an der Niederfrequenzkomponente des Eingangs-Sprachsignals und Addieren der Niederfrequenzkomponente, an der die Geräuschverringerung durchgeführt wurde, zu der Hochfrequenzkomponente des Eingangs-Sprachsignals.

10. Vorrichtung nach Anspruch 9, in der das Geräuschverringerungs-Mittel ein Pegelerfassungs-Mittel (13) zum Erfassen des Signalpegels des Eingangs-Sprachsignals enthält, wobei das Geräuschpegelverringerungs-Mittel (16) eine Pegelerweiterung, die verschiedene Wirkungen ergibt, mit einem Schwellenwert des Eingangs-Sprachsignalpegel als eine Grenze ausführt und den Schwellenwert modifiziert, der auf das Steuersignal anspricht.

11. Vorrichtung nach Anspruch 10, in der das Geräuschverringerungs-Mittel (16) die Wirkung der Pegelerweiterung für durch das Pegelerfassungs-Mittel erfaßte Eingangs-Sprachsignalpegel, die nicht höher als der Schwellenwert sind, verringert.

12. Vorrichtung nach Anspruch 10, in der das Geräuschverringerungs-Mittel (16) eine Pegelerweiterung durchführt, die eine unterschiedliche Wirkung für jeden einer Vielzahl von Schwellenwerten des Eingangs-Sprachsignals ergibt.

13. Vorrichtung nach Anspruch 9, 10, 11 oder 12, in der das Geräuschverringerungs-Mittel umfaßt:

das Pegelerfassungs-Mittel (13) zum Erfassen der Durchschnittsleistung des Eingangs-Sprachsignals für jede Einheitszeitperiode als der Eingangs-Signalpegel des Eingangs-Sprachsignals,
ein Unterdrückungsverhältniseinstell-Mittel (14) zum Einstellen eines Signal-Unterdrückungsverhältnisses, das auf den erfaßten Signalpegel des Eingangs-Sprachsignals und das Steuersignal anspricht, und
ein arithmetisches-logisches Mittel (16) zum Multiplizieren des Eingangs-Signalpegels mit dem Unterdrückungsverhältnis durch Ausführen einer Geräuschverringerungs-Operation.

14. Vorrichtung nach Anspruch 13, in der das Geräuschverringerungs-Mittel umfaßt:

ein Glättungs-Mittel (15) zum Aufnehmen eines Signal-Unterdrückungswerts und Glätten des aufgenommenen Signal-Unterdrückungsverhältnisses innerhalb der Einheitszeitperiode.

15. Vorrichtung nach Anspruch 14, in der das Glättungs-Mittel (15) die Glättungswirkung vergrößert, wenn der erfaßte Signalpegel kleiner als der Pegel für die frühere Einheitszeitperiode ist.

**16.** Vorrichtung nach einem der Ansprüche 9 bis 15, die ferner umfaßt:

ein Komprimierungskodier-Mittel zum Komprimierungskodieren des Eingangs-Sprachsignals, wobei das Geräuscherfassungs-Mittel den Pegel der Geräuschkomponente in dem Eingangs-Sprachsignal unter Benutzung von Kodierungsparametern erfaßt, die von dem Sprachsignal-Komprimierungskodier-Mittel gewonnen sind.

**17.** Fernsprechapparat, der ein Mikrofon, das ein Sprachsignal aufnimmt, und eine Vorrichtung zur Verringerung des Geräusches hat, das in dem Sprachsignal enthalten ist, nach einem der Ansprüche 9 bis 16.

**Revendications**

**1.** Procédé pour réduire le bruit contenu dans un signal vocal d'entrée, comprenant les étapes de :

détection du niveau d'une composante de bruit contenue dans le signal vocal d'entrée pour former un bruit de commande selon le niveau de bruit détecté ; et,
exécution d'une opération de réduction de bruit sur le signal vocal d'entrée ;

caractérisé en ce que l'opération de réduction de bruit comprend les étapes de :

sélection de l'un d'une pluralité d'algorithmes de traitement selon ledit signal de commande, lesdits algorithmes de traitement étant :
un premier algorithme de réduction de bruit pour calculer un rapport de suppression selon le niveau dudit niveau de signal vocal d'entrée et multiplier ledit signal vocal d'entrée par le rapport de suppression calculé,
un deuxième algorithme de réduction de bruit pour calculer un rapport de suppression selon le niveau d'un signal correspondant audit signal vocal d'entrée dont la composante haute fréquence est accentuée et multiplier ledit signal par le rapport de suppression calculé, et
un troisième algorithme de réduction de bruit pour exécuter une opération de réduction de bruit uniquement sur la composante basse fréquence du signal vocal d'entrée et ajouter la composante basse fréquence à bruit réduit à la composante haute fréquence du signal vocal d'entrée.

**2.** Procédé selon la revendication 1, dans lequel ladite étape de réduction de bruit comprend l'exécution d'une extension de niveau pour produire différents effets en utilisant une valeur de seuil du niveau de signal du signal vocal d'entrée comme limite, ledit seuil étant modifié selon ledit signal de commande.

**3.** Procédé selon la revendication 2, dans lequel ladite étape de réduction de bruit comprend la diminution de l'effet d'extension de niveau pour des niveaux de signal vocal d'entrée non supérieurs à ladite valeur de seuil.

**4.** Procédé selon la revendication 2 ou 3, dans lequel ladite étape de réduction de bruit comprend l'exécution d'une extension de niveau pour obtenir des effets différents pour plusieurs valeurs de seuil dudit niveau de signal vocal d'entrée comme limites.

**5.** Procédé selon la revendication 1, 3 ou 4, dans lequel ladite étape de réduction de bruit comprend l'étape de :

détection de la puissance moyenne du signal vocal d'entrée pendant chacune de plusieurs périodes d'unité de temps comme dit niveau de signal vocal d'entrée.

**6.** Procédé selon la revendication 5, dans lequel ladite étape de réduction de bruit comprend l'étape de :

lissage dudit rapport de suppression de bruit dans ladite période d'unité de temps.

**7.** Procédé selon la revendication 6, dans lequel ladite étape de réduction de bruit comprend l'étape de :

augmentation de l'effet de lissage quand le niveau de signal vocal d'entrée est inférieur au niveau de la période d'unité de temps précédente.

**8.** Procédé selon l'une quelconque des revendications précédentes comprenant en outre l'étape de :

compression-codage du signal vocal et détection du niveau de la composante de bruit dans le signal vocal d'entrée dans l'étape de détection de niveau de bruit en utilisant des paramètres de codage obtenus par ladite étape de compression-codage.

9. Dispositif pour réduire le bruit dans un signal vocal d'entrée, le dispositif comportant un microphone (11) dans lequel entre le signal vocal d'entrée et des moyens de réduction de bruit (16, 26, 36) pour réduire le bruit contenu dans le signal vocal d'entrée, ledit dispositif comprenant :

des moyens de détection de niveau de bruit (18) pour détecter le niveau d'une composante de bruit dans ledit signal vocal d'entrée et sortir un signal de commande en réponse au niveau de bruit détecté, et
des moyens pour exécuter une opération de réduction de bruit sur le signal vocal d'entrée,

caractérisé en ce que lesdits moyens de réduction de bruit comprennent plusieurs moyens de traitement (16, 26, 36) ayant des algorithmes de traitement respectifs et sélectionnent l'un d'eux selon ledit signal de commande, lesdits algorithmes de traitement étant :

un premier algorithme de réduction de bruit pour calculer un rapport de suppression selon le niveau dudit signal vocal d'entrée et multiplier ledit signal vocal d'entrée par le rapport de suppression calculé,
un deuxième algorithme de réduction de bruit pour calculer un rapport de suppression selon le niveau d'un signal correspondant audit signal vocal d'entrée dont la composante haute fréquence est augmentée et multiplier ledit signal vocal d'entrée par le rapport de suppression calculé, et
un troisième algorithme de réduction de bruit pour exécuter une opération de réduction de bruit uniquement sur la composante basse fréquence du signal vocal d'entrée et ajouter la composante basse fréquence à bruit réduit à la composante haute fréquence du signal vocal d'entrée.

10. Dispositif selon la revendication 9, dans lequel lesdits moyens de réduction de bruit comprennent des moyens de détection de niveau (13) pour détecter le niveau de signal du signal vocal d'entrée, lesdits moyens de réduction de niveau de bruit (16) exécutent une extension de niveau qui donne différents effets avec une valeur de seuil du niveau de signal vocal d'entrée comme limite et modifient la valeur de seuil en réponse audit signal de commande.

11. Dispositif selon la revendication 10, dans lequel lesdits moyens de réduction de bruit (16) diminuent l'effet d'une extension de niveau pour des niveaux de signal vocal d'entrée détectés par lesdits moyens de détection de niveau qui ne sont pas supérieurs à ladite valeur de seuil.

12. Dispositif selon la revendication 10, dans lequel lesdits moyens de réduction de bruit (16) exécutent une extension de niveau qui donnera un effet différent pour chacune d'une pluralité de valeurs de seuil dudit signal vocal d'entrée.

13. Dispositif selon la revendication 9, 10, 11 ou 12, dans lequel lesdits moyens de réduction de bruit comprennent :

des moyens de détection de niveau (13) pour détecter la puissance moyenne du signal vocal d'entrée pendant chaque période d'unité de temps comme niveau de signal du signal vocal d'entrée,
des moyens d'établissement de rapport de suppression (14) pour établir un rapport de suppression de signal en réponse au niveau de signal détecté du signal vocal d'entrée et audit signal de commande, et
des moyens arithmétiques-logiques (16) pour multiplier ledit niveau de signal d'entrée par ledit rapport de suppression au moyen de l'exécution d'une opération de réduction de bruit.

14. Dispositif selon la revendication 13, dans lequel lesdits moyens de réduction de bruit comprennent :

des moyens de lissage (15) pour recevoir la valeur de suppression de signal et lisser le rapport de suppression de signal reçu dans ladite période d'unité de temps.

15. Dispositif selon la revendication 14, dans lequel lesdits moyens de lissage (15) augmentent l'effet de lissage quand le niveau de signal détecté est inférieur au niveau pendant la période d'unité de temps précédente.

16. Dispositif selon l'une quelconque des revendications 9 à 15, comprenant en outre :

des moyens de compression-codage pour comprimer-coder les signaux vocaux d'entrée, lesdits moyens de détection de bruit détectant le niveau de la composante de bruit dans le signal vocal d'entrée en utilisant des paramètres de codage obtenus desdits moyens de compression-codage de signal vocal.

17. Téléphone comportant un microphone dans lequel est entré un signal vocal, et un dispositif pour réduire le bruit contenu dans le signal vocal selon l'une quelconque des revendications 9 à 16.

**FIG.1**

EP 0 661 689 B1

**FIG.2**

**FIG.3**

20

**FIG.4**

EP 0 661 689 B1

FIG.5

22

**FIG.6**

**FIG.7**

EP 0 661 689 B1